# EUROPEAN PATENT SPECIFICATION

(11) **EP 2 399 493 B1**
(45) Date of publication and mention of the grant of the patent: **08.10.2014**
(21) Application number: 10167256.6
(22) Date of filing: 24.06.2010
(51) Int. Cl.: A47J 27/21, A47J 31/20

(54) **Ceramic based tea machine with adapting arrangement to compensate ceramic manufacturing irregularities**
Teemaschine auf Keramikbasis mit Adapteranordnung zum Ausgleich von Unregelmäßigkeiten der Keramikherstellung
Machine à thé en céramique avec agencement d'adaptation pour compenser les irrégularités de fabrication de la céramique

(43) Date of publication of application: 28.12.2011
(73) Proprietor: Eksen Makine Sanayi ve Ticaret A.S., 41480 Kocaeli (TR)
(72) Inventor: Tahincioglu, Besim, 41480, Kocaeli (TR)
(74) Representative: Sevinç, Erkan

(56) References cited:
- EP-A1- 2 033 549
- WO-A1-02/01992
- WO-A1-02/07575

## Description

### Technical Field of the Invention

The present invention relates to a tea preparing apparatus and more particularly a ceramic-based tea machine having both a porcelain teapot for brewing tea and a porcelain boiling body for boiling water.

### Background of the Invention

Tea is traditionally consumed on a daily basis in large quantities in the country of the applicant. A good flavor tea is believed to be prepared by way of boiling water in a first receptacle and steeping tea leaves in hot water in a second receptacle.

A household appliance similar to the one of the invention, is disclosed in WO 02/07575 A1.

Use of electrical tea machines with separate teapots from when they first emerged in the market is still limited due to the common mistrust that a good flavor tea is believed to be obtained only by way of observing a set of parameters such as amount of tea plant used, material of the teapot in which tea plants are brewed, duration of brewing cycle and adequate flavor that can be extracted from tea leaves. Therefore, tea preparing is almost believed to be a personal ability of some "qualified" people and therefore reluctance to full mechanization is maintained.

A more prominent factor among others and decisive in the flavor is however believed to be the material of the brewing teapot. While ceramic-based teapots are widely used at homes in a conventional manner, lack of fully ceramic-based tea machines in the market is a setback to widespread use of electrical tea machines. While teapots made out of porcelain as brewers are also used on top of electrical water boiling units, the latter boiling units made out of other material, mainly such as polymers, bring about an unfitting combination of a porcelain teapot with a polymer based water boiling unit on top of which said porcelain teapot is placed. This produces an unpleasant combination of adverse visual effects in association with entirely different properties. Therefore, the present invention aims at providing an electrical tea machine having a porcelain teapot as well as a porcelain water boiling receptacle, which visually complete each other or at least which do not produce a noticeable lack of harmony.

A common difficulty in the manufacture of porcelain water boiling units stem from the fact that, ceramic receptacles must observe acceptable tolerances of measure in millimetric range to fit into an electrical heating base. To this end, an adapter arrangement used according to the present invention ensure that a ceramic-based boiler unit manufactured within a quite large and unacceptable tolerance range due to the nature of ceramic manufacturing, is securely mounted to an electrical base of a tea machine.

### Objects of the Invention

Primary object of the present invention is to provide an electrical tea machine having a porcelain teapot as well as a porcelain water boiling receptacle.

Another object of the present invention is to provide a tea machine with a ceramic-based boiler unit which is securely mounted to an electrical heating base although having measures within a variable large tolerance range.

### Summary of the Invention

The present invention proposes a domestic appliance as defined in claim 1, and specifically a tea machine having a first receptacle for boiling water and a second receptacle containing plant leaves to be brewed. Said second receptacle is conventionally placed on top of said first receptacle. Both of said first and second receptacles are made out of ceramic. Said first receptacle comprises an electrical heater and a lower adapter ring for adapting porcelain bodies of non standard diameters to said electrical heater. Further said first receptacle also comprises a second adapter ring which encircles the upper portion including the mouth of said first receptacle. Said upper and lower adapter rings are connected to the porcelain body in between by means of a silicon applied region around the annular edge portion of said porcelain body. Said upper adapter ring serves to the purpose of receiving the base of the teapot made out of porcelain in its entirety.

### Brief Description of the Figures

Accompanying drawings are given solely for the purpose of exemplifying a tea machine whose advantages over prior art were outlined above and will be explained in detail hereinafter:
Fig. 1 demonstrates perspective view of an electrical tea machine having a first and a second receptacle.

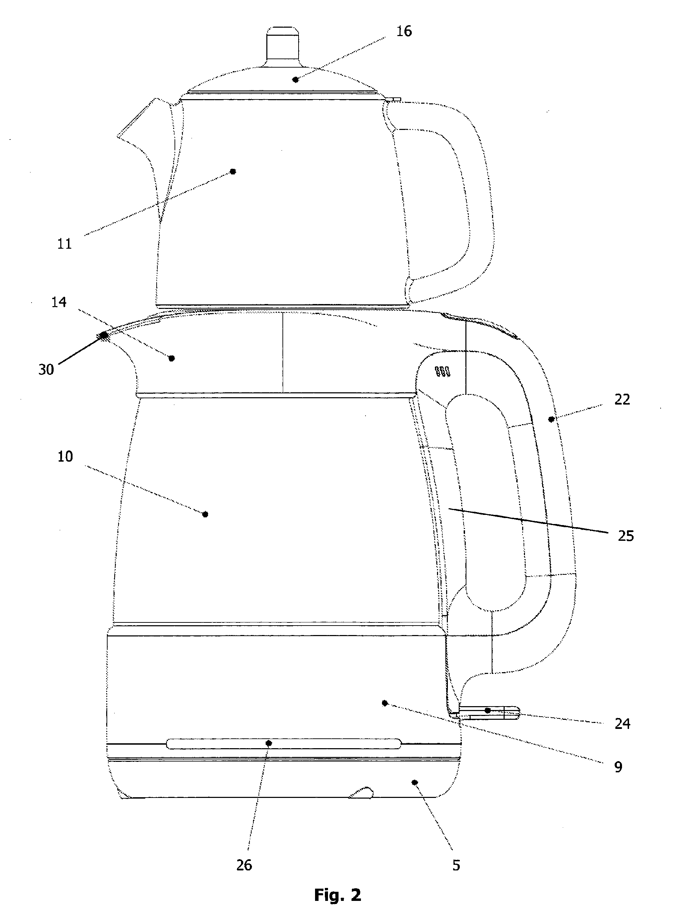

Fig. 2 demonstrates lateral view of an electrical tea machine having a first and a second receptacle.
Fig. 3 demonstrates a lateral cross-sectional view of an electrical tea machine having a first and a second receptacle.
Fig. 4a demonstrates "B" detail as shown in Fig. 3.
Fig. 4b demonstrates "A" detail as shown in Fig. 3.
Fig. 4c demonstrates an alternative embodiment of detail "B" according to the present invention.

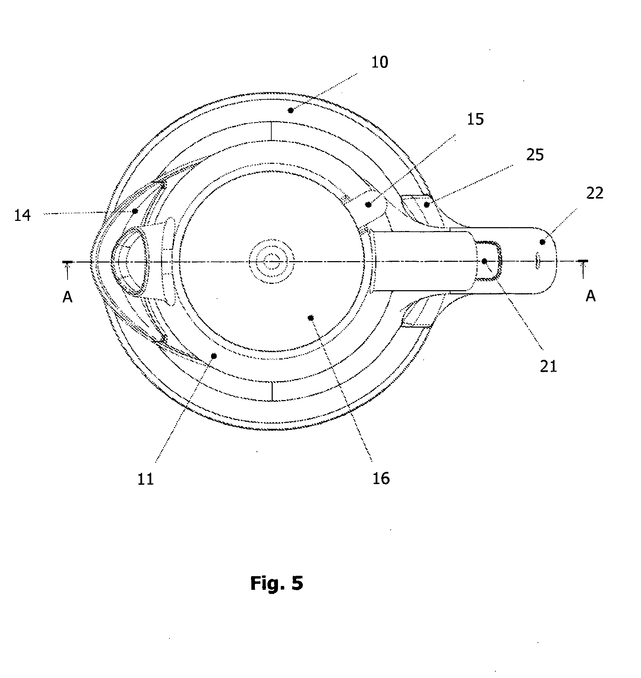

Fig. 5 demonstrates a top view of an electrical tea machine according to the present invention.

### Detailed Description of the Invention

Referring now to the figures outlined above, the present invention proposes an electrical household appliance for preparing tea in a traditional manner, i.e. by way of using separate boiling and brewing receptacles (respectively 10 and 11). The appliance comprises a first receptacle (10) for boiling water prior to brewing and a second receptacle (11) in which tea leaves are placed and brewed accordingly.

Both receptacles (10, 11) are put one above another to allow thermal communication and heat energy radiated from a heat source in communication with said first receptacle (10) also brews tea leaves in said second receptacle (11). The base of said second receptacle (11) therefore covers the open upper end of said first receptacle (10) in a conventional manner.

As is generally practiced in the available art, effective power consumption by said heat source is lowered during brewing. Temperature in the lower receptacle may be controlled by means of a plurality of control arrangements and sensors; that is while temperature in the lower receptacle (10) may be kept in a near-boiling temperature, different control schemes to allow continuous or discontinuous powering of the heat source can be applied.

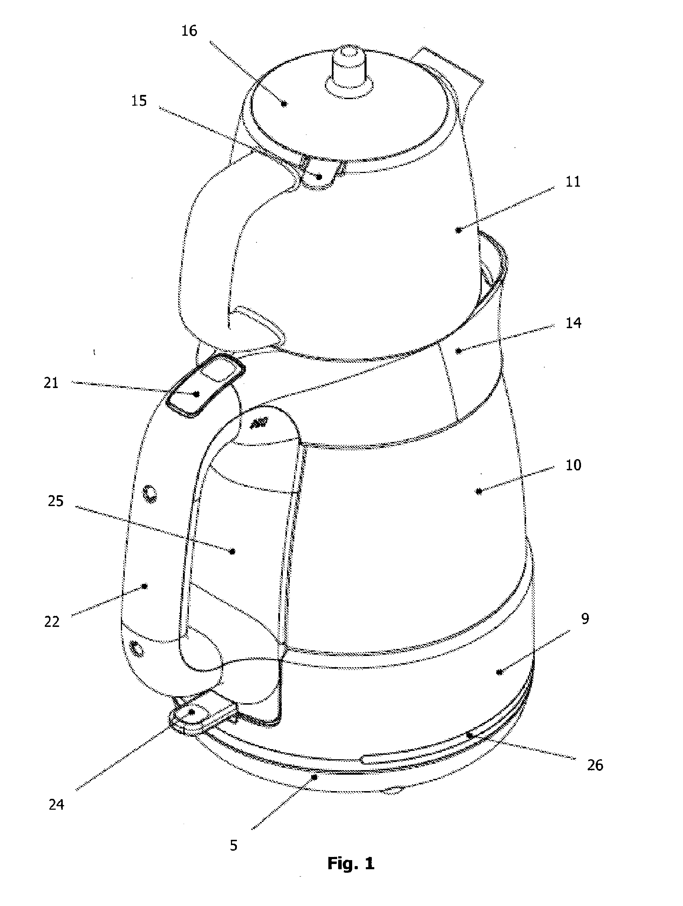

Referring to Fig. 1, the lower receptacle (10) according to the present invention comprises a handle (22) joined to the lower receptacle (10) body around a support portion (25). The machine conventionally comprises an on/off switch (24) and a steam switch (20) button (21), said switch (20) being disposed in a slot (19). The upper receptacle comprises a lid (16) and a filter (13) extension part (15) as seen in Fig. 1.

The lower receptacle (10) according to the present invention is connected to an electrical heater base (5) through a lower adapter ring (9), the latter being separated from said base part (5) by a linear lamp window (26).

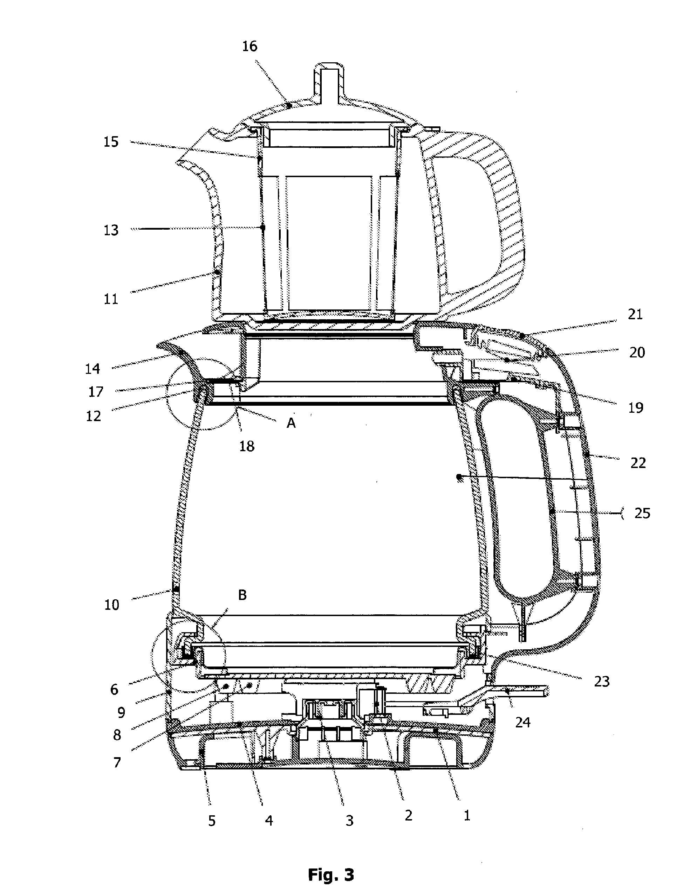

Referring now to Fig. 3, said base (5) comprises an electrical connector (3) with an on/off switch (2). The base (5) has a cover (1) adjacent to a lower receptacle (10) base cover (4).

Said electrical heater base (5) is connected to the porcelain lower receptacle (10) by means of a lower adapter ring (9) according to the present invention. The latter adapts non-standard diameter porcelain bodies of lower receptacles (10) to said electrical heater base (5) as explained hereinafter. Further, said first receptacle (10) also comprises a second adapter ring or an upper adapter ring (15) which encircles the upper portion of said first receptacle (10), also including the mouth (30) portion thereof. Said upper and lower adapter rings (respectively 14 and 9) are connected to the porcelain body (10) in between, by means of silicon regions applied around the annular edge portions of said porcelain body (10). Said upper adapter ring (14) serves to the purpose of receiving the base of the teapot (11) made out of porcelain in its entirety and joins the lower receptacle (10) handle (22) comprising critical elements such as steam switch (20) to the lower receptacle (10) body.

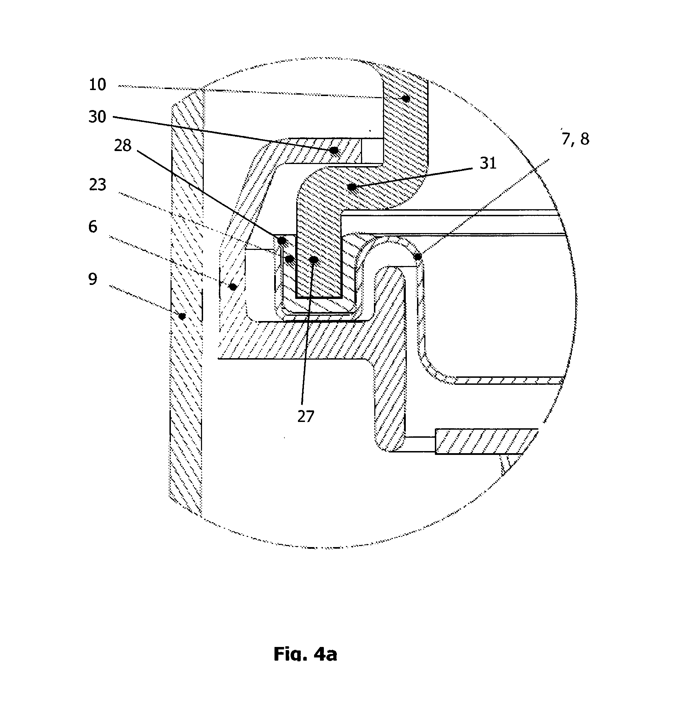

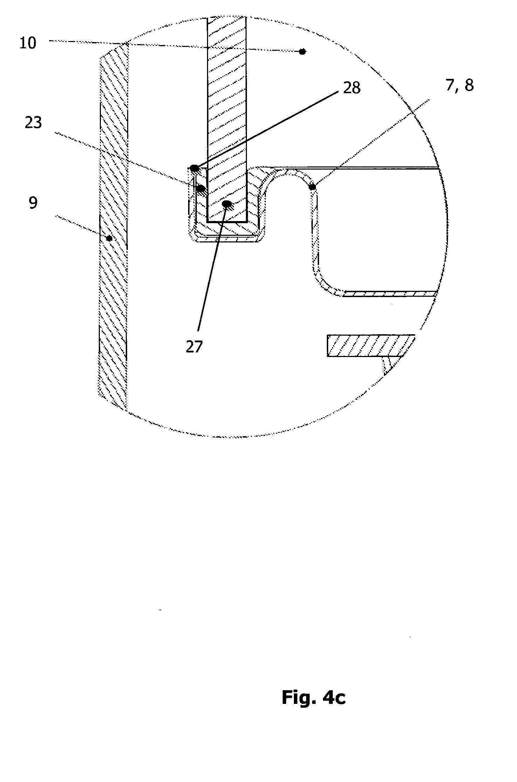

Referring now to Fig. 4a which demonstrates detail "B" of Fig. 3, the ceramic body (10) has lower extremities (27) encircled by a silicon region (23) applied around said lower extremities (27) of said lower receptacle body (10) throughout their circumferential line. Said silicon applied region (23) is delimited by the circumferential outer ends of an extension part (28) of electrical resistances (7, 8). Said extension part (28) of said electrical resistances (7, 8) is supported and held in engaging relationship with the lower extremities (27) of said receptacle body (10) by a holder element (6) such that said extension part (28) is squeezed and securely held in place between said receptacle body (10) and said holder element (6).

The extension part (28) being heat conductive and disposed in thermal conduction communication with said electrical resistances (7, 8) provides that a single piece heater body is provided, which is in contact with said lower extremities (23) of said receptacle body (10) for a more effective heat transfer, said resistances (7, 8) being located in the immediate vicinity of the lower receptacle (10).

The two electrical resistances' (7, 8) power dissipation typically allow fast boiling with a greater wattage resistance (7) compared to a lower wattage resistance (8) for keeping boiled water in the lower receptacle (10) warm for compensating heat loss, which is now more limited due to lower receptacle's (10) material being ceramic.

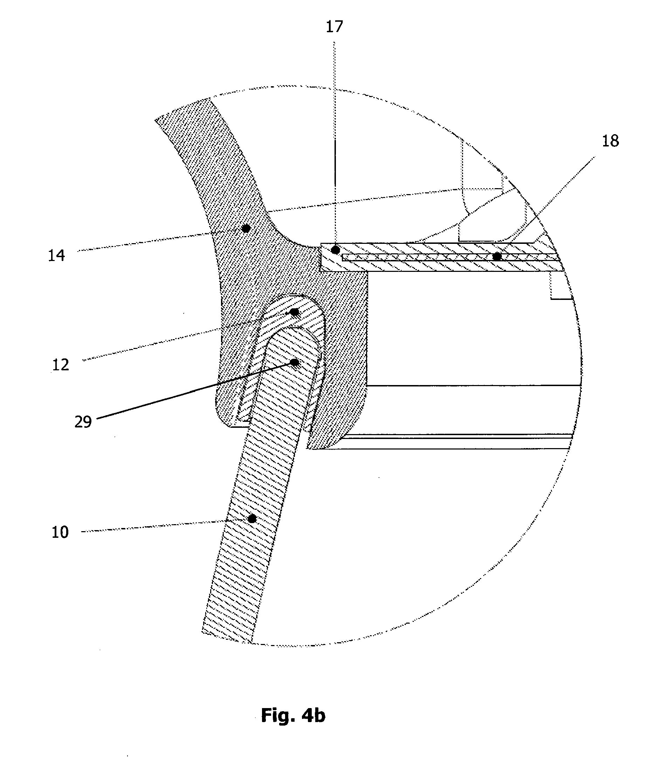

Referring now to Fig. 4b, which demonstrates detail "A" of Fig. 3, the lower receptacle (10) body has upper extremities (29) also encircled by a silicon region (12) applied around said upper extremities (29) of said lower receptacle body (10) within a circumferential groove (31) of said upper adapter ring (14).

The present invention is defined in claim 1 and proposes an electrical household appliance comprising a ceramic receptacle (10) for receiving liquids to be heated and a base (5) which is connected to said receptacle (10) by means of a lower adapter ring (9). Said base (5) has electrical means (7, 8) for heating liquids in said receptacle (10). Said receptacle (10) body has lower extremities (27) encircled by an adhesive filler material (23) applied around said lower extremities (27) of said lower receptacle body (10) throughout their circumferential line delimited by the circumferential extension part (28) of said electrical means (7, 8) within said lower adapter ring (9).

Said holder element (6) has a curved end part (30) with a tip portion leaning against said receptacle body (10) such that its end part (30) engages with a curved intermediate part (31) of said receptacle body (10) in a locking relationship.

## Claims

1. An electrical household appliance comprising a ceramic receptacle (10) for receiving liquids to be heated, a base (5) which is connected to said receptacle (10) by means of a lower adapter ring (9), said base (5) having electrical means (7, 8) for heating liquids in said receptacle (10) wherein said receptacle (10) body has lower extremities (27) encircled by an adhesive filler material (23) applied around said lower extremities (27) of said lower receptacle body (10) throughout their circumferential line delimited by a circumferential extension part (28) of said electrical means (7, 8) within said lower adapter ring (9) and wherein
said extension part (28) is disposed in thermal conduction communication with said electrical means (7, 8) whereby a single piece heater body is provided, which is in contact with said lower extremities (27) of said receptacle body (10),
a holder element (6) is provided, said holder element (6) having a curved end part (30) with a tip portion leaning against said receptacle body (10),
said holder element's (6) end part (30) engages with a curved intermediate part (31) of said receptacle body (10) in a locking relationship and,
said receptacle (10) is connected to an upper adapter ring (14) such that its upper extremities (29) are encircled by an adhesive filler material (12) within a circumferential groove of said upper adapter ring (14).

2. An electrical household appliance as in Claim 1 wherein said extension part (28) of said electrical means (7, 8) is supported in engaging relationship with said lower extremities (27) of said receptacle body (10) by said holder element (6) such that said extension part (28) is squeezed between said receptacle body (10) and said holder element (6).

3. An electrical household appliance as in Claim 1 wherein said lower receptacle (10) is suitable for receiving a second receptacle (11) whereby the base of said second receptacle (11) covers the open upper end of said first receptacle (10).

4. An electrical household appliance as in any previous claims wherein said adhesive filler material (12, 23) comprises silicone.

5. An electrical household appliance as in Claim 4 wherein said appliance is a tea machine having a first boiling receptacle (10) and a second brewing receptacle (11).

## Patentansprüche

1. Elektrisches Haushaltsgerät, aufweisend ein keramisches Gefäß (10) zur Aufnahme von zu erhitzenden Flüssigkeiten, eine Basis (5), welche mit dem Gefäß (10) mittels eines unteren Adapterrings (9) verbunden ist, wovon die Basis (5) eine elektrische Einrichtung (7, 8) zum Erhitzen von Flüssigkeiten in dem Gefäß (10) besitzt, wobei der Körper des Gefäßes (10) untere Enden (27) besitzt, die von einem Kleberfüllermaterial (23) umringt sind, das um die unteren Enden (27) des unteren Gefäßkörpers (10) um dessen gesamte Umfangslinie herum begrenzt durch ein Umfangsverlängerungsteil (28) der elektrischen Einrichtung (7, 8) in dem unteren Adapterring (9) aufgebracht ist und wobei:
das Verlängerungsteil (28) in einer Wärmeleitverbindung mit der elektrischen Einrichtung (7, 8) angeordnet ist, wodurch ein einteiliger Heizkörper bereitgestellt ist, welcher mit den unteren Enden (27) des Gefäßkörpers (10) in Kontakt steht,
ein Halterelement (6) bereitgestellt ist, wobei das Halterelement (6) ein gebogenes Endteil (30) mit einem Spitzenabschnitt besitzt, der an dem Behälterkörper (10) anliegt,
das Endteil (30) des Halterelementes (6) mit einem gebogenen Zwischenteil (31) des Gefäßkörpers (10) in einer Verriegelungsbeziehung steht, und
der Behälter (10) mit einem oberen Adapterring (14) dergestalt verbunden ist, dass seine oberen Enden (29) durch ein Kleberfüllermaterial (12) in einer Umfangsnut des oberen Adapterrings (14) umringt sind.

2. Elektrisches Haushaltsgerät nach Anspruch 1, wobei das Verlängerungsteil (28) der elektrischen Einrichtung (7, 8) in eingreifender Beziehung mit den unteren Enden (27) des Gefäßkörpers (10) durch das Halterelement (6) dergestalt unterstützt ist, dass das Verlängerungsteil (28) zwischen dem Gefäßkörper (10) und dem Halterelement (6) eingeklemmt ist.

3. Elektrisches Haushaltsgerät nach Anspruch 1, wobei das untere Gefäß (10) zur Aufnahme eines zweiten Gefäßes (11) geeignet ist, wodurch die Basis des zweiten Gefäßes (11) das offene obere Ende des ersten Gefäßes (10) abdeckt.

4. Elektrisches Haushaltsgerät nach einem der vorstehenden Ansprüche, wobei das Kleberfüllermaterial (12, 23) Silikon aufweist.

5. Elektrisches Haushaltsgerät nach Anspruch 4, wobei das Gerät eine Teemaschine mit einem ersten Kochgefäß (10) und einem zweiten Brühgefäß (11) ist.

## Revendications

1. Appareil électroménager comprenant un réceptacle en céramique (10) pour recevoir des liquides à chauffer, une base (5) qui est raccordée audit réceptacle (10) au moyen d'une anneau adaptateur inférieur (9), ladite base (5) ayant des moyens électriques (7, 8) pour chauffer des liquides dans ledit réceptacle (10), dans lequel ledit corps de réceptacle (10) a des extrémités inférieures (27) encerclées par une matière de remplissage adhésive (23) appliquée autour desdites extrémités inférieures (27) dudit corps de réceptacle inférieur (10) sur toute leur ligne circonférentielle délimitée par une partie d'extension circonférentielle (28) desdits moyens électriques (7, 8) à l'intérieur dudit anneau adaptateur inférieur (9), et dans lequel :
ladite partie d'extension (28) est disposée en communication thermiquement conductrice avec lesdits moyens électriques (7, 8), moyennant quoi on prévoit un corps de dispositif de chauffage d'un seul tenant qui est en contact avec lesdites extrémités inférieures (27) dudit corps de réceptacle (10),
un élément de support (6) est prévu, ledit élément de support (6) ayant une partie d'extrémité incurvée (30) avec une partie de pointe s'appuyant contre ledit corps de réceptacle (10),
ladite partie d'extrémité (30) de l'élément de support (6) se met en prise avec une partie intermédiaire incurvée (31) dudit corps de réceptacle (10) dans une relation de blocage, et
ledit réceptacle (10) est raccordé à un anneau adaptateur supérieur (14) de sorte que ses extrémités supérieures (29) sont encerclées par une matière de remplissage adhésive (12) à l'intérieur d'une rainure circonférentielle dudit anneau adaptateur supérieur (14).

2. Appareil électroménager selon la revendication 1, dans lequel ladite partie d'extension (28) desdits moyens électriques (7, 8) est supportée en relation de mise en prise avec lesdites extrémités inférieures (27) dudit corps de réceptacle (10) par ledit élément de support (6) de sorte que ladite partie d'extension (28) est comprimée entre ledit corps de réceptacle (10) et ledit élément de support (6).

3. Appareil électroménager selon la revendication 1, dans lequel ledit réceptacle inférieur (10) est approprié pour recevoir un second réceptacle (11), moyennant quoi la base dudit second réceptacle (11) recouvre l'extrémité supérieure ouverte dudit premier réceptacle (10).

4. Appareil électroménager selon l'une quelconque des revendications précédentes, dans lequel ladite matière de remplissage adhésive (12, 23) comprend de la silicone.

5. Appareil électroménager selon la revendication 4, dans lequel ledit appareil est une machine à thé ayant un premier réceptacle d'ébullition (10) et un second réceptacle d'infusion (11).
